# FASCICULE DE BREVET EUROPEEN

(11) **EP 3 579 364 B1**
(45) Date de publication et mention de la délivrance du brevet: **30.11.2022**
(21) Numéro de dépôt: 19178980.9
(22) Date de dépôt: 07.06.2019
(51) Int. Cl.: H02G 5/02

(54) **INSTALLATION ÉLECTRIQUE COMPORTANT UN BOÎTIER DE PROTECTION**
ELEKTRISCHE ANLAGE MIT EINEM SCHUTZGEHÄUSE
ELECTRICAL INSTALLATION COMPRISING A PROTECTIVE HOUSING

(30) Priorité: 08.06.2018 FR 1855011
(43) Date de publication de la demande: 11.12.2019
(73) Titulaire: Schneider Electric Industries SAS, 92500 Rueil Malmaison (FR)
(72) Inventeur: VIGNES, Thierry, 38050 GRENOBLE Cedex 09 (FR); LEPRETRE, Pascal, 38050 GRENOBLE CEDEX 09 (FR)
(74) Mandataire: Lavoix

(56) Documents cités:
- DE-A1- 2 630 963
- DE-C1- 19 542 867
- DE-U- 7 044 493
- JP-A- 2016 031 845
- KR-A- 20030 026 523
- US-A- 4 658 504
- US-A1- 2015 098 169
- US-A1- 2018 083 425

## Description

L'invention concerne un boîtier de protection pour une installation électrique et une installation électrique comportant un tel boîtier de protection.

Les installations électriques, telles que les tableaux de distribution électrique, comportent généralement une ou plusieurs barres de raccordement électriquement conductrices par phase qui permettent de distribuer le courant électrique au sein de l'installation. Les barres de raccordement peuvent être connectées à d'autres barres de raccordement ou à une plage de raccordement d'un appareil électrique.

Il est connu d'utiliser des boîtiers de protection électriquement isolants qui sont montés au niveau de zones de jonction entre deux barres de raccordement ou entre une barre de raccordement et un appareil électrique, par exemple comme décrit dans EP 0 435 772 B1, KR20030026523 et US4658504.

De tels boîtiers de protection évitent notamment la formation d'arcs électriques entre éléments conducteurs sous tension lorsque l'installation électrique est en fonctionnement.

Un inconvénient des boîtiers de protection connus est que leur forme ne correspond pas toujours à la conformation géométrique des zones de jonction entre barres de raccordement et/ou appareils électriques. En pratique, les installations électriques peuvent présenter de multiples configurations très différentes les unes par rapport aux autres et il est difficile de prévoir à l'avance une forme de boîtier de protection qui convienne à toutes ces configurations. De plus, les boîtiers de protection sont généralement fabriqués en plastique moulé, de sorte que concevoir et fabriquer un moule de boîtier pour chaque configuration théoriquement possible n'est pas faisable d'un point de vue industriel.

Ainsi, il est fréquent que les boîtiers de protection installés afin de correspondre à plusieurs configurations présentent des formes différentes de la forme des zones de jonction, de sorte que ces zones de jonction ne sont qu'imparfaitement protégées par un tel boîtier de protection.

En particulier, cette différence de forme conduit souvent à la présence d'un espacement entre les barres de raccordement et les parois internes du boîtier, dans lesquels se forme une lame d'air piégée à l'intérieur du boîtier de protection. Lorsque l'installation électrique est en fonctionnement, la chaleur produite par effet Joule par la circulation du courant dans les barres de raccordement conduit à une élévation de la température de la lame d'air. La dissipation thermique vers l'extérieur du boîtier de protection est limitée. Il en résulte un échauffement qui peut devenir important au point de dégrader la performance de l'installation de distribution électrique, voire compromettre la sécurité et l'intégrité de l'installation électrique.

Il existe donc un besoin pour un boîtier de protection pour une installation électrique qui remédie aux inconvénients décrits ci-dessus.

A cet effet, l'invention concerne une installation électrique, telle qu'un tableau de distribution électrique, comportant au moins une barre de raccordement électrique connectée, à un élément électriquement conducteur tel qu'une autre barre de raccordement électrique ou à un appareil électrique, l'installation électrique comportant un boîtier de protection électriquement isolant monté sur ladite barre de raccordement au niveau d'une zone de jonction entre ladite barre et l'autre élément électriquement conducteur, le boîtier de protection comportant au moins deux coques, conformément à la revendication 1. Chaque coque inclut des surfaces internes destinées à enserrer au moins une partie de la barre de raccordement au niveau d'une zone de jonction, au moins 50 % de la superficie desdites surfaces internes étant en contact direct avec un élément électriquement conducteur de la zone de jonction.

Ainsi, en augmentant la surface interne du boîtier qui est en contact avec la ou les barre(s) et leur(s) système(s) de raccordement au niveau de la zone de jonction, le volume d'air piégé à l'intérieur du boîtier et directement en contact avec la barre de raccordement est réduit. Le risque de dégradation de la performance lié à l'échauffement est donc diminué.

Selon des aspects avantageux mais non obligatoires de l'invention, un boîtier de protection tel peut incorporer une ou plusieurs des caractéristiques suivantes, prises isolément ou suivant toute combinaison techniquement admissible :
- La zone de jonction comporte un élément de fixation, tel qu'une vis ou un boulon, pour solidariser ladite barre de raccordement à un élément électriquement conducteur dans la zone de jonction, et la surface de contact comporte une portion creusée qui délimite un logement de réception d'une tête de l'élément de fixation.
- Un jeu radial non nul est ménagé entre l'élément de fixation et les parois latérales du logement de réception.
- Les coques comportent des organes de fixation complémentaires pour attacher réversiblement les coques l'une à l'autre, tels que des languettes associées avec des fentes de forme correspondante.
- Les languettes ont une largeur comprise entre 5mm et 20mm et une épaisseur comprise entre 2mm et 4mm.
- Au moins une des coques comporte des parois latérales opposées destinées à enserrer de part et d'autre une barre de raccordement qui sont dimensionnées avec un jeu négatif, c'est à dire avec un espacement l'une par rapport à l'autre qui est inférieur à la dimension correspondante de la barre de raccordement.
- Le jeu négatif est compris entre 0,1 mm et 0,8mm.
- Le boîtier de protection est fabriqué au moyen d'un procédé de fabrication additive, par exemple un procédé de frittage sélectif de poudre laser ou par fusion de fil fondu.
- Au moins une paroi extérieure du boîtier comporte un marquage personnalisé intégré dans la paroi extérieure, par exemple en relief, notamment pour faire figurer un code d'identification ou une référence produit ou pour identifier une zone de mesure de la température définissant un emplacement privilégié de positionnement d'une sonde de température externe.

L'invention sera mieux comprise et d'autres avantages de celle-ci apparaîtront plus clairement à la lumière de la description qui va suivre d'un mode de réalisation d'un boîtier de protection et d'une installation électrique, donnée uniquement à titre d'exemple et faite en référence aux dessins annexés, dans lesquels :
- la figure 1 représente schématiquement une première installation électrique comportant un boîtier de protection selon un premier mode de réalisation de l'invention ;
- la figure 2 représente schématiquement le boîtier de protection de la figure 1 en vue éclatée ;
- la figure 3 représente schématiquement une deuxième installation électrique comportant un boîtier de protection selon un deuxième mode de réalisation de l'invention ;
- les figures 4 et 5 représentent schématiquement une première partie du boîtier de protection de la figure 3 selon deux orientations différentes ;
- les figures 6 et 7 représentent schématiquement une deuxième partie du boîtier de protection de la figure 3 selon deux orientations différentes ;
- les figures 8 et 9 représentent schématiquement une troisième partie du boîtier de protection de la figure 3 selon deux orientations différentes.

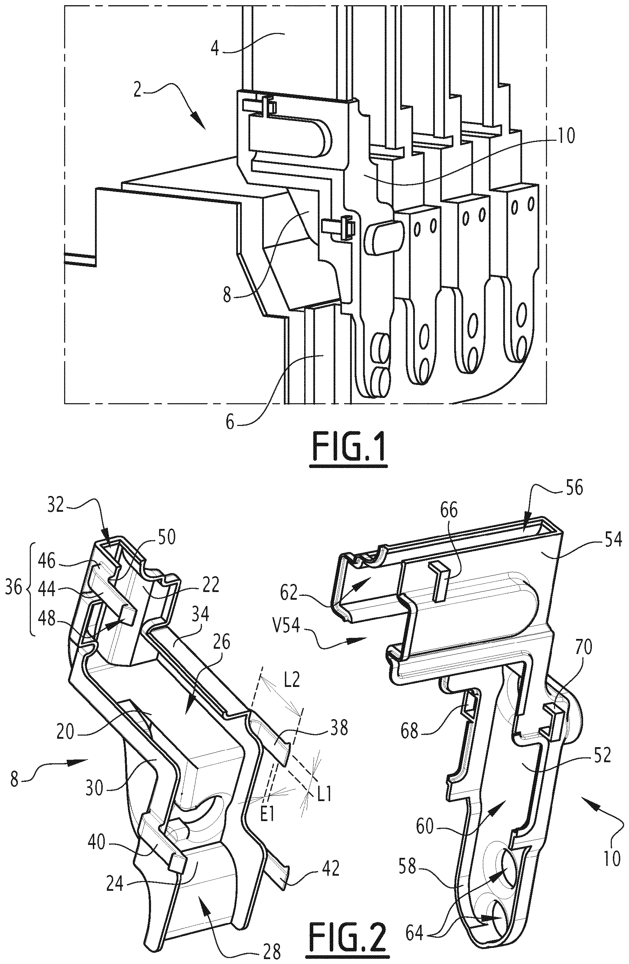

La figure 1 représente une première installation électrique 1 pourvue d'un boîtier de protection 2 pour protéger une zone de jonction assurant une connexion électrique entre une barre de raccordement électrique 4 et un autre élément électriquement conducteur de l'installation 1, ici avec une plage de raccordement d'un appareil électrique 6. Par exemple, l'installation 1 est un tableau de distribution électrique.

La barre de raccordement 4, aussi nommée « busbar » en langue anglaise, est une barre d'un matériau électriquement conducteur, de préférence un matériau métallique, notamment du cuivre ou de l'aluminium, qui sert à transporter et distribuer un courant électrique dans l'installation électrique 1.

L'appareil électrique 6 est ici un appareil de commutation électrique, tel qu'un disjoncteur ou un contacteur, ou un appareil de distribution ou de mesure électrique à usage domestique ou industriel.

Le boîtier de protection 2 permet d'assurer une protection de la zone de jonction entre la barre 4 et l'appareil 6. A cet effet, le boîtier 2 est destiné à être monté sur la zone de jonction.

D'une part, le boîtier 2 assure une protection mécanique empêchant un contact accidentel avec les éléments électriquement conducteurs appartenant à la zone de jonction et en empêchant aussi l'insertion d'éléments extérieurs à l'installation 1.

De préférence, le boîtier 2 est étanche, par exemple avec niveau d'étanchéité aux corps solides supérieur ou égal à l'indice de protection IP4x défini par la norme CEI-60529.

D'autre part, le boîtier 2 est électriquement isolant et est réalisé en un matériau électriquement isolant, par exemple en matière plastique. Cela permet notamment d'éviter la formation d'arcs électriques entre éléments électriquement conducteurs de l'installation 1 lorsque l'installation 1 est en fonctionnement.

De façon générale, le boîtier 2 comporte au moins deux coques, voire plus, destinées à être assemblées pour former le boîtier 2. Chaque coque inclut des surfaces internes destinées à venir en contact avec la barre 4 pour enserrer au moins une partie de la barre 4 au niveau de la zone de jonction, au moins 50 % de la superficie desdites surfaces internes étant en contact direct avec un élément électriquement conducteur de la zone de jonction (en l'occurrence ici avec la barre, ou la plage de raccordement de l'appareil ou la pièce de connexion), et de préférence au moins 60 % ou 75 % ou encore 80 % de la superficie desdites surfaces internes.

En augmentant la surface interne du boîtier qui est en contact avec la barre de raccordement au niveau de la zone de jonction, le volume d'air piégé à l'intérieur du boîtier et directement en contact avec la barre de raccordement est réduit. Le risque d'échauffement est donc diminué. En d'autres termes, le boîtier 2 permet, de par sa forme adaptée sur mesure, de coller à la barre 4 et de la zone de jonction.

De plus, en raison de la présence de la lame d'air, il est difficile voire impossible de mesurer avec précision depuis l'extérieur d'un boîtier connu la température de la barre 4. Par exemple, en plaçant une sonde de température ou un dispositif de mesure de température sans contact sur une paroi extérieure d'un boîtier connu, la température mesurée n'est pas représentative de la température réelle de la barre 4 à cause de la lame d'air piégée entre la paroi du boîtier et la barre 4. Au contraire, avec le boîtier 2, une telle mesure est facile à mettre en œuvre au niveau des parois du boîtier 2 qui sont en contact direct avec la barre 4 ou plus généralement avec les éléments conducteurs dans la zone de jonction. La mesure est aussi plus représentative de la température réelle.

Selon des exemples de mise en œuvre, lorsque la zone de jonction comporte un élément de fixation, tel qu'une vis ou un boulon, pour solidariser ladite barre de raccordement 4 à l'autre élément électriquement conducteur, alors la surface de contact comporte avantageusement une portion creusée, ou bombée, de préférence de forme oblongue ou circulaire, qui délimite un logement de réception d'une tête de l'élément de fixation.

La paroi interne formant le fond du logement de réception est de préférence en contact direct avec la tête de l'élément de fixation, ce dernier étant généralement lui aussi sous tension puisque connecté à la barre de raccordement et réalisé généralement en un matériau métallique. Par exemple, la superficie de cette paroi interne est incluse dans le total de la superficie des surfaces internes décrites ci-dessus.

En pratique, un jeu radial entre l'élément de fixation et les parois latérales du logement de réception est autorisé pour faciliter le montage du boîtier 2.

Selon des modes de réalisation particulièrement avantageux, le boîtier 2 est fabriqué au moyen d'un procédé de fabrication additive, par exemple un procédé de frittage sélectif de poudre laser (« Selective Laser Sintering » en langue anglaise) ou par un procédé de fusion de fil fondu (« Fused Deposit Modeling » en langue anglaise) ou par d'autres procédés équivalents.

La fabrication additive permet de fabriquer industriellement le boîtier 2 « sur mesure » ou en petites séries en fonction de la configuration géométrique particulière de la zone de jonction de l'installation 1. Cela est plus simple à mettre en œuvre que de confectionner un moule spécifique pour ensuite fabriquer le boîtier 2 par moulage.

Par exemple, pour fabriquer un boîtier 2 sur mesure pour une installation 1 donnée, une étape préalable de conception est mise en place, à partir d'un modèle numérique à trois dimensions de l'installation 1 ou à partir d'un relevé topographique numérique de la forme de l'installation 1.

Avantageusement, la fabrication additive permet également d'ajouter un marquage personnalisé intégré dans une paroi extérieure du boîtier 2, par exemple en relief, notamment pour faire figurer un code d'identification ou une référence produit du boîtier 2 pouvant être spécifique à chaque exemplaire fabriqué du boîtier 2.

Le marquage peut également, en variante, servir à identifier une zone de mesure de la température, par un marquage en relief intégré au boîtier, délimitant ainsi un emplacement privilégié de positionnement d'une sonde de température externe ou un emplacement de visée d'un dispositif de mesure de température sans contact, par exemple une caméra infrarouge. La zone de mesure est de préférence ménagée au niveau d'une paroi du boîtier 2 destinée à venir en contact direct avec un élément conducteur de la zone de raccordement, notamment avec la barre 4.

Les figures 1 et 2 illustrent plus en détail un exemple d'un mode de réalisation du boîtier 2. La barre 4 est ici orientée verticalement et la zone de jonction est formée sur l'extrémité inférieure de la barre 4. La plage de raccordement est formée au niveau d'un bord supérieur d'une face avant de l'appareil 6. La barre 4 et la plage de raccordement sont ici connectées par une pièce de connexion, non décrite en détail mais néanmoins visible sur la figure 1, qui fait ici partie de la zone de jonction.

On comprend néanmoins que d'autres formes et configurations du boîtier 2 sont possibles pour s'adapter à la forme de la zone de raccordement sur laquelle le boîtier 2 est destiné à être monté.

Le boîtier 2 comporte ici une première coque 8 destinée à être placée à l'arrière de la barre 4 et une deuxième coque 10 destinée à être emboîtée avec la première coque 8 et à être placée à l'avant de la barre 4 pour recouvrir la plage de raccordement.

La première coque 8 comporte une partie principale 20, s'étendant ici horizontalement, une partie secondaire supérieure 22 et une partie secondaire inférieure 24. Les parties secondaires 22, 24 s'étendent verticalement perpendiculairement à la partie principale 20, dans des directions opposées, depuis des extrémités opposées de la partie principale 20. Chaque coque 8, 10 est ici fabriquée d'un seul tenant.

Chaque partie 20, 22 et 24 comporte une surface interne destinée à venir en contact direct avec la barre 4 lorsque le boîtier 2 est en configuration montée.

Par exemple, la surface interne 26 de la partie 20 est destinée à venir en contact avec une extrémité inférieure de la barre 4. La surface interne 28 de la partie 22 destinée à venir en contact avec une face arrière de la pièce de connexion.

La coque 8 comporte des rebords latéraux 30 qui s'étendent sur les bords latéraux respectifs des parties 20, 22 et 24 vers l'intérieur du boîtier 2. Sur la partie supérieure 22, les rebords latéraux 30 définissent une fente supérieure 32 destinée à recevoir l'arrière de la barre 4. Dans l'exemple illustré, l'un des rebords latéraux 30 de la partie principale 20 est prolongé par une paroi repliée 34 qui rentre vers l'intérieur de la coque 8 en s'étendant parallèlement à la surface 26 sur une distance inférieure ou égale à la moitié de la largeur de la surface 26. La paroi repliée 34 sert avantageusement d'élément de guidage lors du montage du boîtier 2.

Avantageusement, les coques 8 et 10 du boîtier 2 comportent des organes de fixation complémentaires pour attacher réversiblement les coques 8 et 10 l'une à l'autre, par exemple des éléments de fixation mâle et femelle, notamment des languettes ou crochets associées avec des fentes de forme correspondante.

A cet effet, la coque 8 comporte des languettes 36, 38, 40 et 42, ici au nombre de quatre, bien qu'en variante ce nombre peut être différent, par exemple compris entre deux et dix. De préférence, les languettes d'une même coque sont espacées les unes des autres par un pas supérieur ou égal à 80mm. Par exemple, les languettes sont perpendiculaires aux surfaces internes de la coque en contact avec la barre 4.

Les languettes 36, 38, 40 et 42 sont ici identiques, de sorte que la description ci-dessous d'une languette est transposable aux autres languettes de la coque 8.

On comprend également qu'en variante, les languettes peuvent être ménagées sur la coque 10 au lieu de la coque 8, ou encore être réparties entre les coques 8 et 10. Les fentes correspondantes sont alors agencées en conséquence sur la coque 8 et/ou sur la coque 10.

Dans cet exemple, chaque languette 36, 38, 40 et 42 s'étend longitudinalement depuis un bord latéral 30 de la coque 8, c'est-à-dire ici selon une direction parallèle à la partie 20, vers l'avant de la coque 8, c'est-à-dire en direction de la coque 10.

Par exemple, la languette 36 est montée sur le rebord latéral 30 gauche de la partie 22, la languette 38 est montée sur le rebord latéral 30 droit de la partie 20, et les languettes 40 et 42 sont montées sur les rebords latéraux 30 opposés de la partie 24.

Chaque languette 36, 38, 40 et 42 comporte un corps longitudinal 44 flexible en forme de lame dont une extrémité arrière 46 est solidaire d'un rebord latéral 30 et dont une extrémité avant comporte une tête 48 ici en forme de crochet.

Une fois que la languette est insérée dans une fente, la tête 48 vient en butée contre les bords de la fente et empêche la languette de sortir de la fente par translation vers l'arrière, de sorte que le corps longitudinal 44 doit ensuite être volontairement déformé si l'on veut retirer la languette de la fente.

La référence « E1 » désigne l'épaisseur du corps longitudinal 44 et la référence « L1 » désigne la largeur du corps longitudinal 44. La référence « L2 » désigne la longueur du corps longitudinal 44 mesurée entre une base de la tête 48 et un rebord d'extrémité 50.

Selon des exemples illustratifs, la largeur L1 est comprise entre 5mm et 20mm, de préférence comprise entre 8mm et 12mm. L'épaisseur E1 est comprise entre 2mm et 4mm, de préférence égale à 2,5mm.

La longueur L2 est ici choisie de manière à présenter un jeu négatif entre les coques 8 et 10 à vide de façon à favoriser un plaquage des coques 8 et 10 sur les barres et l'une sur l'autre une fois montées sur la barre 4 et solidarisées par les organes de fixation. Le jeu négatif, noté « LN », est par exemple compris entre 0mm et 1mm, de préférence entre 0 et 0,2mm.

Par exemple, on définit également pour le corps longitudinal 44 une première sous-longueur « L3 » et une deuxième sous-longueur « L4 », non illustrées, qui sont ici définies en fonction de la position de la languette dans la fente complémentaire. En pratique, lorsque la languette est insérée dans la fente, la coque 8 vient en butée vers l'avant contre une portion de la coque 10, par exemple une excroissance formant saillie placée sur la coque 10 en arrière de la fente.

La première sous-longueur L3 correspond à la longueur du corps longitudinal 44 mesurée entre d'une part la fente dans laquelle est insérée la languette et d'autre part la butée contre laquelle vient en appui la coque 8. La deuxième sous-longueur L4 correspond à la longueur entre la fente et la base du corps longitudinal 44. La somme des sous-longueurs L3 et L4 est égale à la longueur L2. Par exemple, la quantité « L2 - L4 » est comprise entre la longueur L3 et la quantité « L3 - LN ».

La deuxième coque 10 comporte ici une partie principale 52 s'étendant verticalement et une partie supérieure 54 qui s'étend perpendiculairement à la partie principale 52, vers l'arrière de la coque 10. La partie principale 52 forme une face avant du boîtier 2.

La partie supérieure 54 délimite un volume de réception V54 pour recevoir la base de la barre 4 et comporte une fente supérieure 56 qui prolonge la fente 32 de la coque 8 pour recevoir la barre 4.

Lorsque le boîtier 2 est assemblé, la partie supérieure 22 de la coque 8 ferme le volume V54 sur l'arrière, et la surface interne 26 de la partie 20 de la coque 8 ferme le volume V54 par-dessous. La partie 52 se prolonge verticalement sur une longueur supérieure à la longueur de la partie inférieure 24 de la coque 8.

La référence 60 désigne une paroi principale interne de la partie 52 et la référence 62 désigne des parois latérales de la partie supérieure 54.

La partie 52 comporte avantageusement une portion creusée ou bombée 64 telle que précédemment décrite. Ces portions bombées sont ici au nombre de deux et permettent ici de recevoir la tête d'éléments de fixation de la zone de jonction dépassant de la face avant de l'appareil tel que visible sur la figure 1.

Dans cet exemple, la coque 10 comporte également des fentes 66, 68, 70 complémentaires avec les languettes 36, 38, 40 et 42. Les fentes sont ici au nombre de quatre mais seules trois sont visibles sur la figure 2 du fait de l'orientation choisie. La fente de la languette 38 n'est pas représentée. Les fentes 66, 68 et 70 coopèrent avec les languettes 36, 42 et 40, respectivement, et sont ici identiques entre elles. Par exemple, la largeur de chaque fente est comprise entre 5mm et 20mm, de préférence entre 8mm et 12mm. L'épaisseur de chaque fente est comprise entre 2mm et 4mm, de préférence égale à 2,5mm.

Selon des modes de mise en œuvre préférés, la distance entre deux parois latérales du boîtier 2 opposées destinées à enserrer de part et d'autre la barre de raccordement 4, cette distance étant mesurée lorsque le boîtier 2 n'est pas monté sur la barre 4, est inférieure ou égale à l'épaisseur de la barre 4.

Ce faisant, on obtient un jeu négatif, ou tolérance dimensionnelle négative, entre les parois latérales opposées, de sorte à précontraindre le boîtier 2 et à favoriser un contact mécanique des parois internes du boîtier 2 avec la barre 4 une fois que le boîtier est en configuration montée. A titre d'illustration, le jeu négatif est compris entre 0.1mm et 0.8mm.

Par exemple, un tel jeu négatif est mis en œuvre pour les parois latérales 30 de la coque 8 et également pour les parois latérales 62 de la coque 10. Selon des variantes, un tel jeu négatif peut être mis en œuvre pour une dimension de la barre 4 autre que son épaisseur, par exemple sa largeur. Le jeu négatif peut aussi être implémenté pour tout autre élément électriquement conducteur de la zone de jonction.

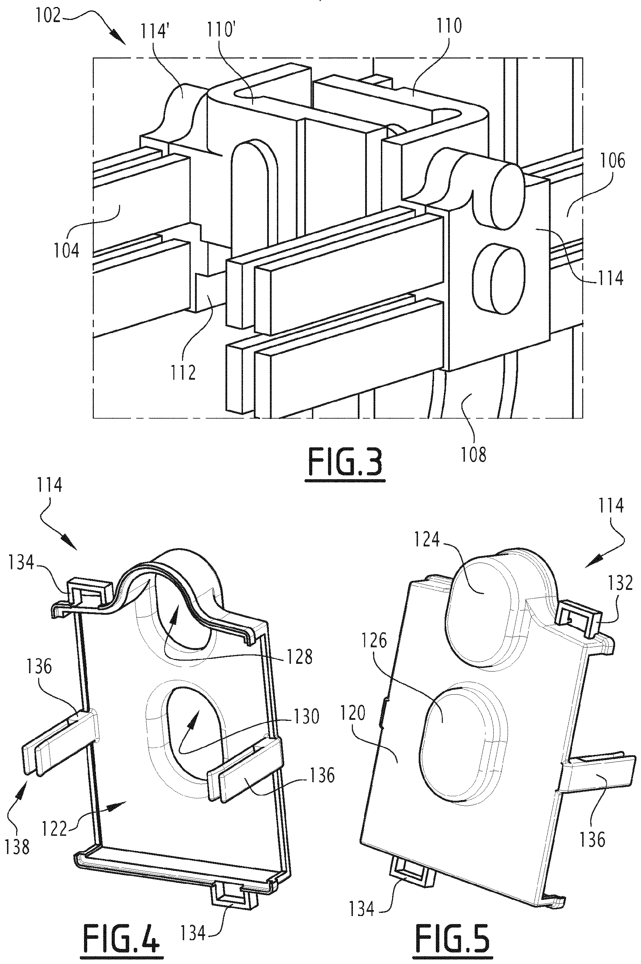

Les figures 3 à 9 représentent un boîtier de protection 102 selon un deuxième mode de réalisation de l'invention. Le boîtier 102 a la même fonction que le boîtier 2 et ce qui a été décrit précédemment en référence au boîtier 2 s'applique ici, notamment en ce qui concerne la protection et les méthodes de fabrication du boîtier. Seules les différences de forme et d'apparence par rapport au boîtier 2 décrit dans le premier mode de réalisation sont ici décrites en détail, dans la mesure où la description générale du boîtier de protection faite ci-dessus peut être transposée au boîtier 102.

La figure 3 représente une deuxième installation électrique 100 pourvue du boîtier de protection 102 pour protéger une zone de jonction assurant une connexion électrique entre deux groupes de premières barres de raccordement électrique 104, 106 horizontales et un groupe de barres de raccordement électrique 108 verticales dont une extrémité supérieure est située entre les groupes de barres 104 et 106.

Les barres 104, 106 et 108 sont analogues à la barre 4 et remplissent une fonction similaire. La zone de jonction est ici formée au niveau de l'extrémité supérieure des barres 108, par exemple au moyen d'un élément électriquement conducteur, tel qu'une une pièce métallique, raccordant fixement les barres 104, 106 et 108 entre elles.

Le boîtier 102 comporte une paire de premières coques 110, une paire de deuxièmes coques 112 et une paire de troisièmes coques 114 qui sont assemblées entre elles autour de la zone de jonction. Chaque coque 110, 112, 114 est ici fabriquée d'un seul tenant.

Dans cet exemple, les coques de chaque paire sont identiques entre elles. Sur la figure 3, la référence 110' est utilisée pour distinguer les deux exemplaires identiques de la paire de premières coques 110. Il en va de même pour la référence 114'.

Les coques 112 sont montées sur les extrémités supérieures des barres 108, par exemple autour de la pièce de raccordement. Les coques 110 sont destinées à être couplées entre elles autour des coques 112. Les coques 114 sont montées sur l'extérieur des barres 104, 106 et sont connectées aux coques 110.

Comme illustré sur les figures 4 et 5, la coque 114 comporte une paroi principale 120 pourvue d'une surface interne 122 formant une face arrière de la paroi 120.

Dans cet exemple, la paroi 120 comporte aussi deux portions creusées ou bombées 124, 126 telles que décrites précédemment et par exemple analogues aux portions 64. Les faces internes des portions bombées 124, 126 portent les références 128 et 130, respectivement.

La coque 114 comporte également des organes de fixation, ici de type femelle, sous la forme de fentes 132 et 134. Une fente 134 s'étend en saillie sous un bord inférieur de la paroi 120, tandis que la fente 132 s'étend en saillie sur un bord supérieur de la paroi 120.

Avantageusement, des structures de guidage 136 formées sur les bords latéraux de la paroi 120 s'étendent perpendiculairement par rapport à la paroi 120 vers l'arrière de la coque 114. Les structures 136 présentent une extrémité en forme de fourche 138 comportant deux mâchoires parallèles dont le rôle est défini dans ce qui suit.

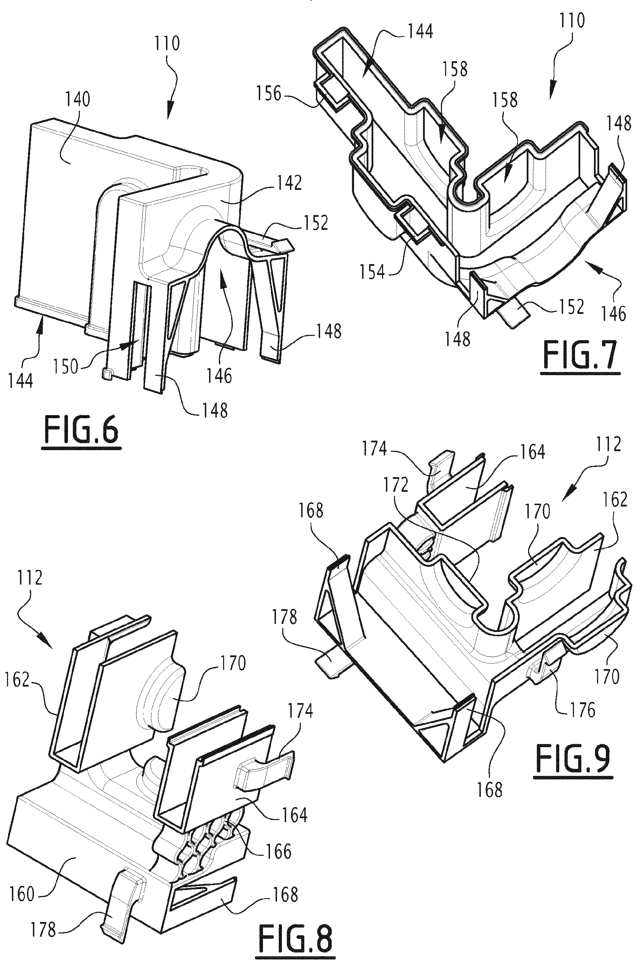

Comme illustré sur les figures 6 et 7, la coque 110 comporte deux parties 140 et 142 coudées à angle droit qui forment une enveloppe délimitant un logement intérieur qui débouche sur une fente inférieure 144 pour recevoir des extrémités supérieures des barres 108. En d'autres termes, les coques 110 viennent coiffer les extrémités supérieures des barres verticales 108.

La partie 142 comporte également une ouverture latérale 146 ménagée sur une face avant et surmontée par une portion arrondie. L'ouverture 146 est bordée latéralement par des pattes 148 verticales qui sont parallèles la face avant de la partie 142 mais qui sont ménages à distance de celle-ci en étant séparées de celle-ci par un espacement 150 vertical de forme oblongue.

Un organe de fixation de type languette 152 s'étend en saillie perpendiculairement à la face avant de la partie 142. Deux organes de fixation de type fente 154, 156 sont formés sur des bords de la fente 144 d'un même côté de la partie 140.

Avantageusement, les parois des parties 140 et 142 comportent des portions creusées ou bombées 158 analogues à celles précédemment décrites.

Comme illustré sur les figures 8 et 9, la coque 112 définit un premier logement 160 et deux logements secondaires 162 et 164 dont des parois sont connectées à une paroi du premier logement 160 par des portions de raccordement 166. Le logement 160 comporte des pattes 168 verticales analogues aux pattes 148.

Les parois latérales du logement 162 comportent ici deux portions creusées ou bombées 170 similaire à celles décrites précédemment et le logement 160 comporte une telle portion bombée 172 sur une de ses parois.

Deux organes de fixation de type languette 174, 176 s'étendent verticalement depuis des parois latérales extérieures des logements 164 et 162, respectivement. Un troisième organe de fixation de type languette 178 s'étend depuis une paroi inférieure extérieure du logement 160.

Les organes de fixation du boîtier 102 sont analogues à ceux du boîtier 2 précédemment décrits, et les règles et valeurs de dimensionnement décrits ci-dessus leur sont applicables.

Lorsque le boîtier 102 est assemblé et monté dans l'installation 100, les pattes 168 sont alignées avec les pattes 148. Les barres latérales 104 sont reçues dans les ouvertures 150 délimitées par les coques 114' et 112, et les barres latérales 106 sont reçues dans les ouvertures 150 délimitées par les coques 114 et 112. En outre, les languettes 152 sont reçues dans les fentes 132 et les languettes 178 sont reçues dans les fentes 134. Les languettes 174 et 176 sont reçues dans les fentes 154 et 156, respectivement.

Les modes de réalisation et les variantes envisagés ci-dessus peuvent être combinés entre eux pour générer de nouveaux modes de réalisation.

## Revendications

1. Installation électrique (1, 100), telle qu'un tableau de distribution électrique, comportant au moins une barre de raccordement électrique (4 ; 104, 106, 108) connectée à un élément électriquement conducteur tel qu'une autre barre de raccordement électrique ou à un appareil électrique, l'installation électrique comportant un boîtier de protection (2 ; 102) électriquement isolant monté sur ladite barre de raccordement au niveau d'une zone de jonction entre ladite barre et l'autre élément électriquement conducteur, le boîtier de protection (2 ; 102) comportant au moins deux coques (8, 10 ; 110, 110', 112, 114, 114') dont chaque coque (8, 10 ; 110, 110', 112, 114, 114') inclut des surfaces internes destinées à enserrer au moins une partie de la barre de raccordement au niveau de la zone de jonction, au moins 50 % de la superficie desdites surfaces internes étant en contact direct avec un des éléments électriquement conducteurs de la zone de jonction, **caractérisé en ce que** le boîtier de protection étant fabriqué au moyen d'un procédé de fabrication additive, par exemple un procédé de frittage sélectif de poudre laser ou par fusion de fil fondu, et **en ce qu'**au moins une paroi extérieure du boîtier (2 ; 102) comporte un marquage personnalisé intégré dans la paroi extérieure, par exemple en relief, pour identifier une zone de mesure de la température définissant un emplacement privilégié de positionnement d'une sonde de température externe ou un emplacement de visée d'un dispositif de mesure de température sans contact, et dans lequel la zone de mesure est ménagée sur une portion de la paroi qui est en contact direct avec la barre ou avec des éléments conducteurs dans la zone de jonction.

2. Installation électrique selon la revendication 1, **caractérisé en ce que** la zone de jonction comporte un élément de fixation, tel qu'une vis ou un boulon, pour solidariser ladite barre de raccordement à l' élément électriquement conducteur dans la zone de jonction, et **en ce que** la surface de contact comporte une portion creusée (64 ; 124, 126, 158, 170, 172) qui délimite un logement de réception d'une tête de l'élément de fixation.

3. Installation électrique selon la revendication 2, **caractérisé en ce qu'**un jeu radial non nul est ménagé entre l'élément de fixation et les parois latérales du logement de réception.

4. Installation électrique selon l'une quelconque des revendications précédentes, **caractérisé en ce que** les coques comportent des organes de fixation complémentaires pour attacher réversiblement les coques l'une à l'autre, tels que des languettes (36, 38, 40, 42 ; 152, 174, 176, 178) associées avec des fentes (66, 68, 70 ; 132, 134, 154, 156) de forme correspondante.

5. Installation électrique selon la revendication 4, **caractérisé en ce que** les languettes ont une largeur (L1) comprise entre 5mm et 20mm et une épaisseur (E1) comprise entre 2mm et 4mm.

6. Installation électrique selon l'une quelconque des revendications précédentes, **caractérisé en ce qu'**au moins une des coques (8, 10 ; 110, 110', 112, 114, 114') comporte des parois latérales opposées destinées à enserrer de part et d'autre la barre de raccordement qui sont dimensionnées avec un jeu négatif, c'est à dire avec un espacement l'une par rapport à l'autre qui est inférieur à la dimension correspondante de la barre de raccordement.

7. Installation électrique selon la revendication 6, **caractérisé en ce que** le jeu négatif est compris entre 0,1mm et 0,8mm.

## Patentansprüche

1. Elektrische Anlage (1, 100), wie beispielsweise ein elektrischer Verteilerkasten, umfassend mindestens eine elektrische Anschlussschiene (4; 104, 106, 108), die mit einem elektrisch leitenden Element, wie beispielsweise einer anderen elektrischen Anschlussschiene, oder mit einem elektrischen Gerät verbunden ist, die elektrische Installation umfassend ein Schutzgehäuse (2; 102), das elektrisch isolierend an der Anschlussschiene auf Höhe eines Verbindungsbereichs zwischen der Schiene und dem anderen elektrisch leitenden Element montiert ist, das Schutzgehäuse (2; 102) umfassend mindestens zwei Schalen (8, 10; 110, 110', 112, 114, 114'),wovon jede Schale (8, 10; 110, 110', 112, 114, 114') Innenflächen zum Umschließen mindestens eines Teils der Verbindungsschiene an dem Verbindungsbereich beinhaltet, wobei mindestens 50 % der Fläche der Innenflächen in direktem Kontakt mit einem der elektrisch leitenden Elemente des Verbindungsbereichs sind, **dadurch gekennzeichnet, dass** das Schutzgehäuse mittels eines additiven Fertigungsverfahrens, beispielsweise eines selektiven Laserpulversinterverfahrens oder durch Schmelzdrahtschmelzen, hergestellt ist, und dass mindestens eine Außenwand des Gehäuses (2; 102) eine in die Außenwand integrierte kundenspezifische Markierung, beispielsweise in Form eines Reliefs, aufweist, um einen Messbereich der Temperatur zu identifizieren, der eine bevorzugte Stelle zur Positionierung eines externen Temperaturfühlers oder eine Zielstelle für eine kontaktlose Temperaturmessvorrichtung definiert, und wobei der Messbereich an einem Abschnitt der Wand ausgebildet ist, der in direktem Kontakt mit der Schiene oder mit leitenden Elementen in dem Verbindungsbereich ist.

2. Elektrische Anlage nach Anspruch 1, **dadurch gekennzeichnet, dass** der Verbindungsbereich ein Befestigungselement, wie beispielsweise eine Schraube oder einen Bolzen umfasst, um die Anschlussschiene in dem Verbindungsbereich fest mit dem elektrisch leitenden Element zu verbinden, und dass die Kontaktfläche einen vertieften Abschnitt (64; 124, 126, 158, 170, 172) umfasst, der einen Aufnahmesitz eines Kopfs des Befestigungselements begrenzt.

3. Elektrische Anlage nach Anspruch 2, **dadurch gekennzeichnet, dass** zwischen dem Befestigungselement und den Seitenwänden des Aufnahmesitzes ein von Null verschiedenes radiales Spiel ausgebildet ist.

4. Elektrische Anlage nach einem der vorherigen Ansprüche, **dadurch gekennzeichnet, dass** die Schalen komplementäre Befestigungsorgane umfassen, um die Schalen reversibel aneinander zu befestigen, wie beispielsweise Zungen (36, 38, 40, 42; 152, 174, 176, 178), die mit Schlitzen (66, 68, 70; 132, 134, 154, 156) entsprechender Form assoziiert sind.

5. Elektrische Anlage nach Anspruch 4, **dadurch gekennzeichnet, dass** die Zungen eine Breite (L1) zwischen 5 mm und 20 mm und eine Stärke (E1) zwischen 2 mm und 4 mm aufweisen.

6. Elektrische Installation nach einem der vorherigen Ansprüche, **dadurch gekennzeichnet, dass** mindestens eine der Schalen (8, 10; 110, 110', 112, 114, 114') gegenüberliegende Seitenwände umfasst, die dazu bestimmt sind, die Anschlussschiene auf beiden Seiten zu umschließen, und die mit einem negativen Spiel dimensioniert sind, das heißt mit einem Abstand zueinander, der kleiner ist als die entsprechende Abmessung der Anschlussschiene.

7. Elektrische Anlage nach Anspruch 6, **dadurch gekennzeichnet, dass** das negative Spiel zwischen 0,1 mm und 0,8 mm ist.

## Claims

1. - An electrical facility (1, 100), such as an electrical distribution board, comprising at least one electrical connection bar (4; 104, 106, 108) connected to an electrically conductive element such as another electrical connection bar or to an electrical appliance, the electrical facility comprising an electrically insulating protective casing (2; 102) mounted on said connection bar at a junction zone between said bar and the other electrically conductive element, the protective casing (2; 102) comprising at least two shells (8, 10 ; 110, 110', 112, 114, 114'), of which each shell (8, 10; 110, 110', 112, 114, 114') includes internal surfaces intended to enclose at least part of the connection bar at the junction area, at least 50% of the area of said internal surfaces being in direct contact with one of the electrically conductive elements of the junction zone **characterized in that** the protective casing is manufactured by means of an additive manufacturing method, for example a selective laser powder sintering method or by melting molten wire, and **in that** at least one outer wall of the casing (2; 102) comprises a customised marking integrated into the outer wall, for example in relief, to identify a temperature measurement area defining a preferred location for positioning an external temperature sensor or a target location for a non-contact temperature measurement device, and wherein the measurement area is provided on a portion of the wall which is in direct contact with the bar or with conductive elements in the junction area.

2. - The electrical facility according to claim 1, **characterized in that** the junction zone comprises a fastening element, such as a screw or bolt, for securing said connection bar to the electrically conductive element in the junction zone, and **in that** the contact surface comprises a recessed portion (64; 124, 126, 158, 170, 172) which delimits a housing for receiving a head of the fastening element.

3. - The electrical facility according to claim 2, **characterized in that** a non-zero radial clearance is provided between the fastening element and the side walls of the receiving housing.

4. - The electrical facility according to any one of the preceding claims, **characterised in that** the shells comprise complementary fastening members for reversibly attaching the shells to each other, such as tabs (36, 38, 40, 42; 152, 174, 176, 178) associated with correspondingly shaped slots (66, 68, 70; 132, 134, 154, 156).

5. - The electrical facility according to claim 4, **characterized in that** the tabs have a width (L1) of between 5mm and 20mm and a thickness (E1) of between 2mm and 4mm.

6. - The electrical facility according to any of the preceding claims, **characterized in that** at least one of the shells (8, 10; 110, 110', 112, 114, 114') comprises opposite side walls intended to enclose the connection bar on either side, which are dimensioned with a negative clearance, i.e. with a spacing from one another which is less than the corresponding dimension of the connection bar.

7. - The electrical facility according to claim 6, **characterized in that** the negative clearance is between 0.1mm and 0.8mm.
